# FASCICULE DE BREVET EUROPEEN

(11) **EP 3 080 679 B1**
(45) Date de publication et mention de la délivrance du brevet: **01.12.2021**
(21) Numéro de dépôt: 14821689.8
(22) Date de dépôt: 10.12.2014
(51) Int. Cl.: G06F 3/01, B60K 37/06, G06F 3/041, B60H 1/00

(54) **DISPOSITIF DE COMMANDE À RETOUR SENSORIEL**
STEUERUNGSVORRICHTUNG MIT SENSORISCHEM FEEDBACK
CONTROL DEVICE WITH SENSORY FEEDBACK

(30) Priorité: 11.12.2013 FR 1302907
(43) Date de publication de la demande: 19.10.2016
(73) Titulaire: DAV, 94046 Créteil Cedex (FR)
(72) Inventeur: TISSOT, Jean-MARC, 94046 Créteil CEDEX (FR)
(74) Mandataire: Delplanque, Arnaud
(86) Numéro de dépôt international: PCT/FR2014/000269
(87) Numéro de publication internationale: WO 2015/086919

(56) Documents cités:
- EP-A1- 2 647 919
- EP-A1- 2 647 919
- WO-A1-2011/093873
- WO-A1-2011/093873
- JP-A- 2005 047 327
- JP-A- 2005 292 976
- US-A- 3 469 837
- US-A- 3 469 837
- US-A1- 2010 302 015
- US-A1- 2010 302 015
- US-A1- 2013 100 008
- US-A1- 2013 100 008
- US-A1- 2014 267 049

## Description

La présente invention concerne un dispositif de commande à retour sensoriel notamment pour véhicule automobile.

Les véhicules sont de nos jours équipés de multiples commandes pour commander les différents systèmes d'un véhicule comme par exemple le système audio, le système de climatisation, le système de navigation entre autres.

Pour ces systèmes, des commandes à l'aveugle se sont beaucoup développées comme par exemple des commandes tactiles, par exemple installées au niveau de la console centrale du véhicule.

Toutefois, afin que l'utilisateur soit informé de la prise en compte d'une commande, on a adjoint aux dispositifs tactiles de commande des unités de retour haptique. Ainsi, lorsqu'une commande est prise en compte, la surface tactile vibre signalant ainsi à l'utilisateur la prise en compte d'une commande. L'utilisateur peut donc en toute sécurité exécuter une commande en aveugle, c'est-à-dire sans détourner les yeux de la route, ceci tout en étant conscient des commandes réalisées.

Plus récemment, des dispositifs de commande comprenant un capteur de geste ont été proposés pour commander différents systèmes d'un véhicule.

Le plus souvent, il s'agit d'une caméra, de capteurs ultrasons ou de capteurs lasers dirigés vers l'intérieur de l'habitacle dans une zone de détection située devant le tableau de bord et à peu près au niveau de la console du milieu.

Dans ce cas, lorsque l'utilisateur exécute un geste prédéfini dans la zone de détection, celui-ci, lorsqu'il est reconnu, aboutit à une commande d'un des systèmes du véhicule, par exemple pour augmenter ou baisser le volume du système audio, augmenter ou baisser la température de l'habitacle etc.

Un dispositif de commande par capture de geste est par exemple décrit dans le document EP 2 639 672.

Toutefois, même si ce geste peut être exécuté en aveugle, l'utilisateur ne peut pas être très sûr que son geste, et donc sa commande, soit bien pris en compte.

Il a été proposé des retours sensoriels sous forme d'un signal auditif ou visuel émis lorsqu'un geste est reconnu et aboutit à une commande afin d'informer l'utilisateur comme par exemple dans le document EP 2 523 069 A2, relatif à une console de jeux.

Toutefois, ce dispositif de commande par capture de geste pour une console de jeux n'est pas adapté à une commande dans un véhicule automobile car il requiert l'attention de son utilisateur alors que l'utilisateur d'un véhicule automobile doit en priorité focaliser son attention sur les événements se déroulant devant le véhicule.

En outre, un tel signal auditif peut être gênant lorsque le conducteur a son système audio en route pour écouter par exemple une émission radio ou un morceau de musique.

De même un signal visuel, généralement une diode clignotante, nécessite que le conducteur détourne son attention de la route ce qui n'est pas admissible.

Les documents US2013/100008 A1 et JP2005-047327 A décrivent chacun un dispositif tel que défini par le préambule de la revendication 1.

Un but de la présente invention est donc de proposer un dispositif de commande à retour sensoriel qui permette d'informer le conducteur d'une reconnaissance d'un geste de façon sûre sans devoir détourner l'attention de la route.

Un autre but qui est indépendant du premier et peut être pris en supplément de celui-ci, est de permettre au conducteur de placer sa main en aveugle dans la zone de détection.

A cet effet, l'invention a pour objet un dispositif de commande à retour sensoriel tel que défini par la revendication indépendante 1.

Le dispositif de commande peut comporter en outre une ou plusieurs des caractéristiques suivantes prises seules ou en combinaison :
L'unité de soufflage d'un flux d'air est par exemple configurée pour délivrer un flux d'air quand la main de l'utilisateur se trouve et/ou entre dans la zone de détection des gestes.

Pour une commande de température d'un habitacle de véhicule automobile, on peut prévoir que la température du flux d'air délivré par l'unité de soufflage augmente pour une commande d'augmentation de température et baisse pour une commande de baisse de température.

Selon un aspect, le flux d'air délivré par l'unité de soufflage est pulsé.

La fréquence de pulsation du flux d'air délivré par l'unité de soufflage peut être une fonction de distances proximale et distale de la main dans la zone de détection.

Selon une variante, l'unité de soufflage est configurée pour délivrer un motif de pulsation pour notifier à l'utilisateur la prise en charge d'une commande.

Selon un autre aspect, l'unité de soufflage est configurée pour délivrer un flux d'air humide ou humidifié.

Dans ce cas, les buses peuvent être alignées sur une ligne ou encore on peut prévoir que les buses sont agencées selon une matrice bidimensionnelle.

Selon un autre aspect, l'unité de soufflage est configurée pour délivrer des jets d'air dont l'intensité correspond à un profil prédéfini.

Ainsi, elle peut être configurée pour délivrer des jets d'air de plus faible intensité sur la périphérie de la zone de détection des gestes et de plus forte intensité vers le centre de la zone de détection des gestes.

L'invention concerne également un tableau de bord de véhicule automobile, caractérisé en ce qu'il comprend un dispositif de commande à retour sensoriel, tel que défini ci-dessus.

D'autres avantages et caractéristiques apparaîtront à la lecture de la description de l'invention, ainsi que des dessins annexés sur lesquels :
- la figure 1 est une vue en perspective d'un habitacle de véhicule automobile équipé d'un dispositif de commande selon l'invention,
- la figure 2 est une vue schématique de dessus d'un dispositif de commande réalisé selon un mode de réalisation,
- la figure 3 est un schéma synoptique du dispositif de commande de la figure 1
- la figure 4 est une vue schématique similaire à la figure 2 d'une variante de l'invention.

Sur ces figures, les éléments identiques portent les mêmes numéros de référence.

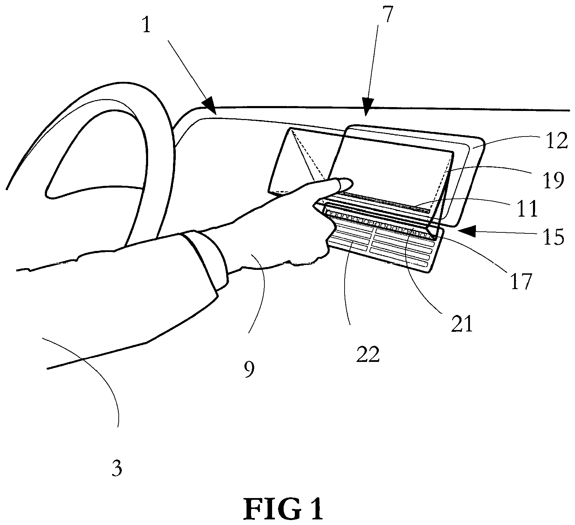

On va décrire un exemple d'un mode de réalisation d'un dispositif de commande selon l'invention au regard des figures 1 à 3.

Sur la figure 1 est représenté en vue partielle d'un habitacle équipé d'un tableau de bord 1.

Un utilisateur/ conducteur 3 est assis devant son volant de conduite 5 et souhaite effectuer une commande à l'aveugle à l'aide du dispositif de commande à retour sensoriel 7 selon l'invention en exécutant un geste avec sa main 9.

A cet effet, le dispositif de commande à retour sensoriel 7 comporte d'une part un détecteur de gestes 11 de la main 9 de l'utilisateur 3 qui est par exemple intégré dans le tableau de bord 1, en dessous d'un écran d'affichage 12.

Le détecteur de gestes 11 comprend par exemple une unité à ultrasons 13, un dispositif laser ou une caméra capable d'identifier des gestes particuliers de la main 9 pour les traduire en une commande d'un des systèmes du véhicule comme par exemple approcher la main 9 du tableau de bord 1 pour baisser le volume ou la température dans l'habitacle ou alors retirer la main 9 pour augmenter ou élever la température dans l'habitacle.

Bien entendu, d'autres commandes peuvent être imaginées par exemple pour un système de navigation ou autres.

Aussi d'autres implantations du capteur de gestes peuvent être imaginées comme par exemple une caméra intégré au rétroviseur.

D'autre part, le dispositif de commande à retour sensoriel 7 comprend une unité de retour sensoriel 15 reliée au détecteur de gestes 11 et délivrant un retour sensoriel à l'utilisateur 3 en fonction des gestes de sa main 9.

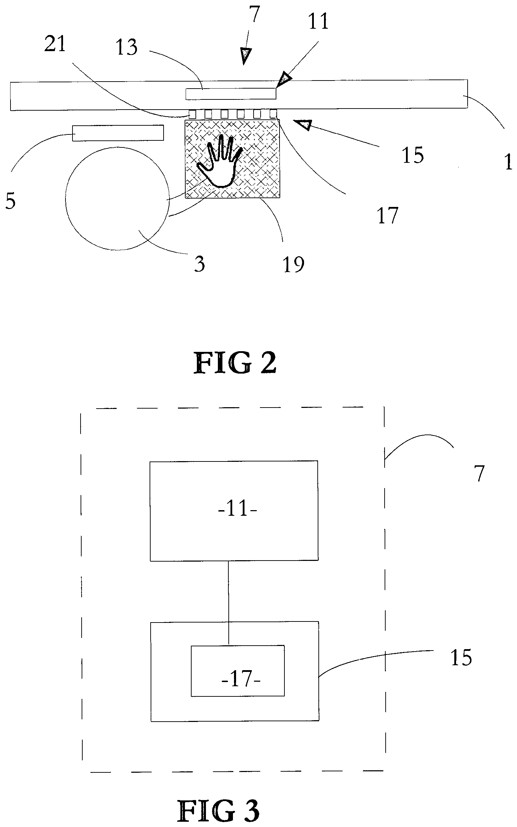

Cette unité de retour sensoriel 15 comprend une unité de soufflage d'un flux d'air 17 en direction d'une zone de détection 19 (représentée en gris ; voir aussi figure 2) des gestes de la main 9 de l'utilisateur 3. Lorsque unité 17 de soufflage d'un flux d'air fonctionne par exemple en fonction d'un geste exécuté et reconnu par le détecteur de gestes 11, l'utilisateur 3 sent le flux d'air sur sa main 9.

Ainsi, l'utilisateur 3 du véhicule dispose d'un retour sensoriel facilement perceptible, qui ne nécessite pas de détourner son attention de la route et qui n'est pas surprenant.

En effet, l'entrée en action de l'unité de soufflage d'un flux d'air 17 sera perçue comme tout à fait naturelle.

Comme montré sur les figures 1 et 2, l'unité de soufflage 17 comprend un ensemble de buses 21 délimitant la zone de détection 19 des gestes de l'utilisateur 3.

Selon l'exemple de la figure 1, les buses 21 sont intégrées dans le tableau de bord 1, par exemple juste au-dessus des buses d'aération 22 de l'habitable et alignées sur une ligne.

Ceci permet d'intégrer l'unité de retour sensoriel 15 facilement dans le tableau de bord 1 d'un véhicule automobile.

Selon une variante plus évoluée et non représentée, les buses sont agencées selon une matrice bidimensionnelle.

Par une configuration bidimensionnelle, on augmente les possibilités de retour sensoriel pour pratiquement guider et accompagner la main 9 de l'utilisateur 3 dans la zone de détection 19.

En outre, l'unité 17 de soufflage d'un flux d'air est configurée pour délivrer un flux d'air quand la main 9 de l'utilisateur 3 entre et / ou se trouve dans la zone de détection 19 des gestes et/ou à proximité de celle-ci.

C'est-à-dire quand l'utilisateur 3 souhaite faire un geste de commande, il dirige sa main 9 vers la zone de détection 19. Lorsque le détecteur de geste 11 détecte que la main 9 entre et/ou se trouve dans la zone de détection 19, l'unité 17 commence à délivrer un flux d'air signalant ainsi à l'utilisateur 3 d'une part que la main 3 est positionnée au bon endroit pour détecter un geste de commande et d'autre part que le dispositif 1 est prêt pour la détection d'un geste.

Il en résulte que le conducteur peut localiser facilement à l'aveugle la zone de détection 19 pour y exécuter une commande.

Afin que l'utilisateur distingue mieux le flux émanant des buses 21 de l'unité 17 de soufflage, le flux d'air délivré par l'unité de soufflage 17 possède, selon l'invention revendiquée, une température différente à celle de l'air environnant l'utilisateur 3. La différence de température entre l'air de l'habitacle et l'air de l'unité de soufflage 17 peut être par exemple de 5° à 10°C. Cette différence de température permet à l'utilisateur 3 de mieux percevoir le flux d'air.

Bien entendu, la température peut être plus élevée ou plus faible que celle de l'air ambiant dans l'habitacle. Pour ce faire, selon l'invention revendiquée, les buses 21 sont couplées par des conduits particuliers au système de climatisation du véhicule pour recevoir de l'air chauffé ou refroidi.

Selon une autre variante, non couverte par la présente invention telle que définie dans les revendications annexées, on place une résistance chauffante en aval des buses 21 pour chauffer l'air.

Pour avoir une perception d'un flux d'air froid, il est aussi envisageable de charger le flux d'air d'humidité qui se déposera sur la main de l'utilisateur et donne l'impression d'un flux d'air plus frais lors de l'évaporation de cette humidité sur la main 9 de l'utilisateur.

Selon une variante particulière adaptée pour une commande de température d'un habitacle de véhicule automobile, on règle la température du flux d'air en sortie de l'unité 17 de soufflage de façon à augmenter cette température du flux d'air pour une commande d'augmentation de température et de la baisser pour une commande de baisse de température.

L'utilisateur 3 aura non seulement un retour sensoriel que son geste de commande est pris en compte, mais en même temps une information sur le degré / l'intensité de sa commande. Ainsi, l'utilisateur 3 peut commander facilement l'augmentation ou la diminution de la température dans l'habitacle.

Selon une autre variante, l'unité de soufflage 17 est équipée d'un pulseur pour délivrer un flux d'air pulsé.

Le fait de pulser l'air permet aussi de mieux apercevoir le flux d'air associé au retour sensoriel. De plus, le fait de pulser le flux d'air permet de diminuer le débit total du flux d'air tout en gardant un retour sensoriel efficace.

Selon un ressenti équivalent de retour sensoriel, on constate aussi que le flux d'air pulsé sera moins perceptible auditivement qu'un flux continu, ce qui ajoute aussi au confort des passagers dans l'habitacle.

De plus, le pulseur permet de régler la fréquence de pulsation du flux d'air.

Ainsi, pour donner à l'utilisateur non seulement un retour sur le fait que sa commande est prise en compte mais aussi dans quelle mesure, la fréquence de pulsation du flux d'air est par exemple une fonction de distances proximale et distale de la main 9 dans la zone de détection 19 par rapport au détecteur de gestes 11.

Non seulement le flux d'air est bien perçu, mais il contient en outre une information sur la mesure le degré de commande elle-même ou sur la position de la main 9 dans la zone de détection 19.

En variante, on prévoit que l'unité de soufflage 17 est configurée pour délivrer un motif de pulsation pour notifier à l'utilisateur la prise en charge d'une commande, par exemple trois pulses d'air, puis une pause puis encore trois pulses d'air.

Le motif de pulsation agit comme un code que l'utilisateur peut facilement reconnaître et facilite l'utilisation du détecteur de gestes 11.

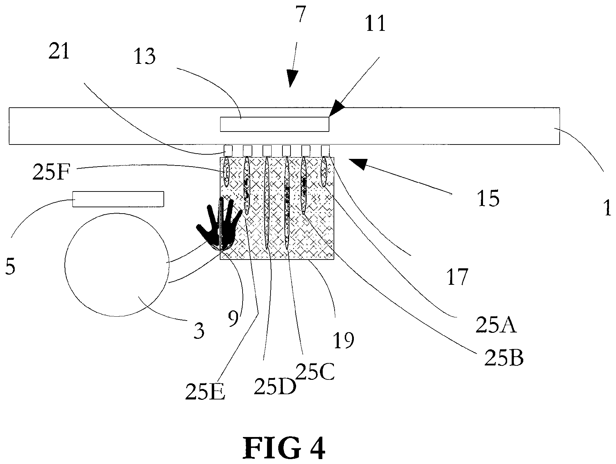

Sur la figure 4 est représentée une autre variante de l'invention qui s'applique particulièrement bien, lorsqu'il a plusieurs buses 21 disposés par exemple en ligne ou une configuration bi-dimensionelle.

Dans ce cas, on prévoit que l'unité de soufflage 17 est configurée pour délivrer des jets d'air dont l'intensité correspond à un profil prédéfini. On peut ainsi obtenir une sorte de relief qui peut être ressenti par l'utilisateur 3.

Selon l'exemple de la figure 4, l'unité de soufflage est par exemple configurée pour délivrer des jets d'air plus de plus faible intensité sur la périphérie de la zone de détection des gestes 19 et plus fort vers le centre de la zone de détection des gestes 19.

Ceci est schématiquement représenté à la figure 4 qui montre divers jets 25 A-F. L'intensité des divers jets est représentée par leurs longueurs. Ainsi les jets périphériques 25A et 25F sont d'intensité plus faible que les jets 25B et 25E intermédiaire et les jets 25C et 25D qui sont au centre de la zone de détection des gestes 19 sont les plus forts.

Ceci peut se faire pour un mode de soufflage en continue comme pour un mode de soufflage pulsé.

Cette variante est intéressante car elle donne une géométrie multidimensionnelle au flux d'air, particulièrement avantageux pour donner une notion de relief à la zone de détection des gestes 19.

Selon une version plus évoluée, le profil d'intensité de soufflage peut correspondre au relief de boutons de commande ou des icônes et leur position affichés sur l'écran 12.

On comprend donc que le dispositif 1 selon l'invention permet un retour sensoriel efficace pour un utilisateur 3, notamment un conducteur automobile sans que ce dernier ait besoin de détourner son attention de la route devant lui.

## Revendications

1. Dispositif de commande à retour sensoriel (1) comportant :
- un détecteur de gestes (11) de la main (9) d'un utilisateur (3),
- une unité de retour sensoriel (15) reliée au détecteur de gestes (11) et délivrant un retour sensoriel à l'utilisateur (3) en fonction des gestes de sa main (9), l'unité de retour sensoriel (15) comprenant une unité (17) de soufflage d'un flux d'air en direction d'une zone de détection (19) des gestes de la main (9) de l'utilisateur (3),
le dispositif de commande à retour sensoriel (1) étant **caractérisé en ce que**
la dite unité de soufflage (17) comprend un ensemble de buses (21) délimitant la zone de détection des gestes (19),
le flux d'air délivré par l'unité de soufflage (17) possède une température différente à celle de l'air environnant l'utilisateur (3),
et les buses (21) sont couplées par des conduits particuliers au système de climatisation du véhicule pour recevoir de l'air chauffé ou refroidi.

2. Dispositif selon la revendication 1, **caractérisé en ce que** l'unité de soufflage d'un flux d'air (17) est configurée pour délivrer un flux d'air quand la main (9) de l'utilisateur se trouve et/ou entre dans la zone de détection des gestes (19).

3. Dispositif selon la revendication 1 ou 2, dans lequel le détecteur de gestes (11) est utilisé pour la commande de température d'un habitacle de véhicule automobile, **caractérisé en ce que** la température du flux d'air délivré par l'unité de soufflage (17) est réglée de façon à ce qu'elle augmente pour une commande d'augmentation de température et baisse pour une commande de baisse de température.

4. Dispositif selon l'une quelconque des revendications 1 à 3, **caractérisé en ce que** le flux d'air délivré par l'unité de soufflage (17) est pulsé.

5. Dispositif selon la revendication 4, **caractérisé en ce que** la fréquence de pulsation du flux d'air délivré par l'unité de soufflage (17) est une fonction de distances proximale et distale de la main (3) dans la zone de détection (19).

6. Dispositif selon la revendication 4, **caractérisé en ce que** l'unité de soufflage (17) est configurée pour délivrer un motif de pulsation pour notifier à l'utilisateur (3) la prise en charge d'une commande.

7. Dispositif selon l'une quelconque des revendications 1 à 6, **caractérisé en ce que** l'unité de soufflage (17) est configurée pour délivrer un flux d'air humide ou humidifié.

8. Dispositif selon l'une des revendications 1 à 7, **caractérisé en ce que** les buses (21) sont alignées sur une ligne.

9. Dispositif selon l'une des revendications 1 à 7, **caractérisé en ce que** les buses (21) sont agencées selon une matrice bidimensionnelle.

10. Dispositif selon les revendications 8 ou 9, **caractérisé en ce que** l'unité de soufflage (17) est configurée pour délivrer des jets d'air dont l'intensité correspond à un profil prédéfini.

11. Dispositif selon la revendication 10, **caractérisé en ce que** l'unité de soufflage (17) est configurée pour délivrer des jets d'air de plus faible intensité sur la périphérie de la zone de détection des gestes (19) et de plus forte intensité vers le centre de la zone de détection des gestes.

12. Tableau de bord (1) de véhicule automobile, **caractérisé en ce qu'**il comprend un dispositif de commande à retour sensoriel (7) selon l'une quelconque des revendications 1 à 11.

## Patentansprüche

1. Steuerungsvorrichtung mit sensorischem Feedback (1), umfassend:
- einen Gestendetektor (11) für die Hand (9) eines Benutzers (3),
- eine sensorische Feedbackeinheit (15), die mit dem Gestendetektor (11) verbunden ist und ein sensorisches Feedback für den Benutzer (3) in Abhängigkeit von den Gesten seiner Hand (9) abgibt,
wobei die sensorische Feedbackeinheit (15) eine Gebläseeinheit (17) für einen Luftstrom in Richtung einer Detektionszone (19) für Gesten der Hand (9) des Benutzers (3) umfasst, wobei die Steuerungsvorrichtung mit sensorischem Feedback (1) **dadurch gekennzeichnet ist, dass** die Gebläseeinheit (17) eine Anordnung von Düsen (21) umfasst, die die Gestendetektionszone (19) begrenzen, der Luftstrom, der von der Gebläseeinheit (17) abgegeben wird, eine Temperatur besitzt, die von derjenigen der Luft, die den Benutzer (3) umgibt, verschieden ist, und die Düsen (21) durch besondere Kanäle mit der Klimaanlage des Fahrzeugs gekoppelt sind, um die erwärmte oder abgekühlte Luft aufzunehmen.

2. Vorrichtung nach Anspruch 1, **dadurch gekennzeichnet, dass** die Luftstrom-Gebläseeinheit (17) dazu konfiguriert ist, einen Luftstrom abzugeben, wenn die Hand (9) des Benutzers sich in der Gestendetektionszone (19) befindet und/oder in diese eintritt.

3. Vorrichtung nach Anspruch 1 oder 2, wobei der Gestendetektor (11) zur Steuerung der Temperatur eines Fahrzeuginnenraums verwendet wird, **dadurch gekennzeichnet, dass** die Temperatur des von der Gebläseeinheit (17) abgegebenen Luftstroms so geregelt wird, dass sie bei einem Befehl zur Temperaturerhöhung steigt und bei einem Befehl zur Temperatursenkung sinkt.

4. Vorrichtung nach einem der Ansprüche 1 bis 3, **dadurch gekennzeichnet, dass** der von der Gebläseeinheit (17) abgegebene Luftstrom gepulst ist.

5. Vorrichtung nach Anspruch 4, **dadurch gekennzeichnet, dass** die Pulsierfrequenz des von der Gebläseeinheit (17) abgegebenen Luftstroms abhängig von der proximalen und distalen Entfernung der Hand (3) in der Detektionszone (19) ist.

6. Vorrichtung nach Anspruch 4, **dadurch gekennzeichnet, dass** die Gebläseeinheit (17) dazu konfiguriert ist, ein Pulsiermuster zu liefern, um dem Benutzer (3) die Übernahme eines Befehls zu melden.

7. Vorrichtung nach einem der Ansprüche 1 bis 6, **dadurch gekennzeichnet, dass** die Gebläseeinheit (17) dazu konfiguriert ist, einen feuchten oder befeuchteten Luftstrom abzugeben.

8. Vorrichtung nach einem der Ansprüche 1 bis 7, **dadurch gekennzeichnet, dass** die Düsen (21) in einer Linie ausgerichtet sind.

9. Vorrichtung nach einem der Ansprüche 1 bis 7, **dadurch gekennzeichnet, dass** die Düsen (21) in einer zweidimensionalen Matrix angeordnet sind.

10. Vorrichtung nach Anspruch 8 oder 9, **dadurch gekennzeichnet, dass** die Gebläseeinheit (17) dazu konfiguriert ist, Luftstrahlen abzugeben, deren Intensität einem vordefinierten Profil entspricht.

11. Vorrichtung nach Anspruch 10, **dadurch gekennzeichnet, dass** die Gebläseeinheit (17) dazu konfiguriert ist, Luftstrahlen von schwächster Intensität an der Peripherie der Gestendetektionszone (19) und von stärkster Intensität zum Zentrum der Gestendetektionszone liefert.

12. Instrumententafel (1) eines Kraftfahrzeugs, **dadurch gekennzeichnet, dass** es eine Steuerungsvorrichtung mit sensorischem Feedback (7) nach einem der Ansprüche 1 bis 11 umfasst.

## Claims

1. Control device (1) with sensory feedback, including:
- a detector (11) for detecting gestures of the hand (9) of a user (3),
- a sensory-feedback unit (15) connected to the gesture detector (11) and providing sensory feedback to the user (3) in accordance with the gestures of their hand (9),
the sensory-feedback unit (15) comprising a unit (17) for blowing a flow of air towards an area (19) for detecting gestures of the hand (9) of the user (3),
the control device (1) with sensory feedback being **characterized in that**
said blower unit (17) comprises a set of nozzles (21) delimiting the gesture detection area (19),
the flow of air delivered by the blower unit (17) has a temperature different from that of the air around the user (3),
and the nozzles (21) are coupled via particular ducts to the air-conditioning system of the vehicle in order to receive heated or cooled air.

2. Device according to Claim 1, **characterized in that** the unit (17) for blowing a flow of air is configured to deliver a flow of air when the hand (9) of the user is located in and/or enters the gesture detection area (19).

3. Device according to Claim 1 or 2, wherein the gesture detector (11) is used to control the temperature of a motor vehicle passenger compartment, **characterized in that** the temperature of the flow of air delivered by the blower unit (17) is regulated in such a way that it increases for a temperature-increasing command and decreases for a temperature-decreasing command.

4. Device according to any one of Claims 1 to 3, **characterized in that** the flow of air delivered by the blower unit (17) is pulsed.

5. Device according to Claim 4, **characterized in that** the pulse frequency of the flow of air delivered by the blower unit (17) is a function of proximal and distal distances of the hand (3) in the detection area (19).

6. Device according to Claim 4, **characterized in that** the blower unit (17) is configured to deliver a pulse pattern to notify the user (3) that a command is being executed.

7. Device according to any one of Claims 1 to 6, **characterized in that** the blower unit (17) is configured to deliver a flow of moist or moistened air.

8. Device according to one of Claims 1 to 7, **characterized in that** the nozzles (21) are aligned in a row.

9. Device according to one of Claims 1 to 7, **characterized in that** the nozzles (21) are arranged in a bidimensional matrix.

10. Device according to Claim 8 or 9, **characterized in that** the blower unit (17) is configured to deliver jets of air the intensity of which corresponds to a predefined profile.

11. Device according to Claim 10, **characterized in that** the blower unit (17) is configured to deliver jets of air of lower intensity at the periphery of the gesture detection area (19) and of greater intensity towards the centre of the gesture detection area.

12. Motor vehicle dashboard (1), **characterized in that** it comprises a control device (7) with sensory feedback according to any one of Claims 1 to 11.
